# EUROPEAN PATENT APPLICATION

(11) **EP 1 717 803 A2**
(43) Date of publication of application: **02.11.2006**
(21) Application number: 06252113.3
(22) Date of filing: 18.04.2006
(51) Int. Cl.: G11B 7/26, G11B 7/0065

(54) **Optical information recording media, method for manufacturing the same and method for recording/reproducing optical information**

(30) Priority: 18.04.2005 JP 2005120341
(71) Applicant: Fuji Photo Film Co., Ltd., Minami-Ashigara-shi, Kanagawa (JP)
(72) Inventor: Nagate, Hiroshi, Fujinomiya-shi Shizuoka (JP)
(74) Representative: Stevens, Jason Paul

(57) **Abstract**

An optical information recording medium is manufactured by forming a retention recess having a specified depth by one of top and bottom substrates and spacers secured thereto, filling and curing the retention recess with a holographic recording material in the retention recess to form a holographic recording layer having a uniform and appropriate thickness and adhering the other substrate to the holographic recording layer. The optical information recording medium thus manufactured is capable of recording and reproducing information at a high density by the use of holography.

## Description

### DESCRIPTION

The present invention relates to media suitable for use in optical information recording by using holography, a method for recording optical information in the medium and/or playing back optical information from the medium by using holography, and a method for manufacturing the optical information recording media.

Optical information recording media have been known as one of large-capacity recording media available for recording a mass of data such as high density image data. While rewritable optical mediums such as a magnetic optical disk and a phase change optical disk and recordable optical mediums such as CD recordable (CD-R) have been in practical use, there is a strong demand for large-capacity optical information recording mediums Conventional optical information recording media are used for two-dimensional recording, and there is a definite ceiling to a capacity increase. Therefore, in recent years, holographic recording media are remarked as a three-dimensional recording medium.

Holographic recording for recording optical information in an optical information recording medium by using holography utilizes interference fringes generated inside the recording medium by superposition of information light carrying image information that has a two-dimensional intensity distribution and reference light that is uniform in intensity so as to cause an optical characteristic distribution, thereby recording the information in the form of the interference fringes. In order to reproduce or play back the information, reference light is applied to the optical information recording medium so as to be diffracted by the interference fringes and outgoes as reproducing light having an intensity distribution corresponding to the optical characteristic distribution.

The holographic recording medium is capable of recording optical characteristic distributions three-dimensionally therein and, in consequence, capacitated for multiplex recording, i.e. to partly superpose areas where information are recorded by separate information light. When employing the multiplex recording in the digital volume holography, it is possible to reproduce original information with a high degree of fidelity despite of an inferior signal to sound ratio (SN ratio). This is because an SN ratio for one spot is considerably enhanced. Consequentially, it is possible to perform hundreds of times of multiple recording, so that a greater storage capacity can be obtained in the optical information recording medium.

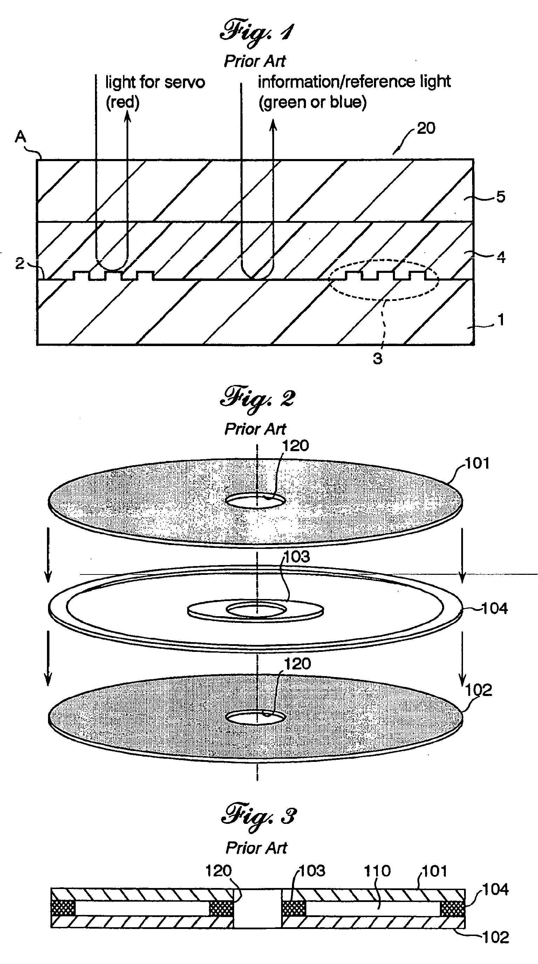

Figure 1 shows a prior art holographic type of optical information recording medium described in, for example, Publication of Japanese Patent Application No. 2002-123949. This optical information recording medium 20 comprises a bottom substrate 1 having a plurality of radial linear servo pit patterns 3, a reflection layer 2 made of, for example, an aluminum film formed over the bottom substrate 1, and a holographic recording layer 4 and a protective substrate 5 formed in this order over the holographic recording layer 4.

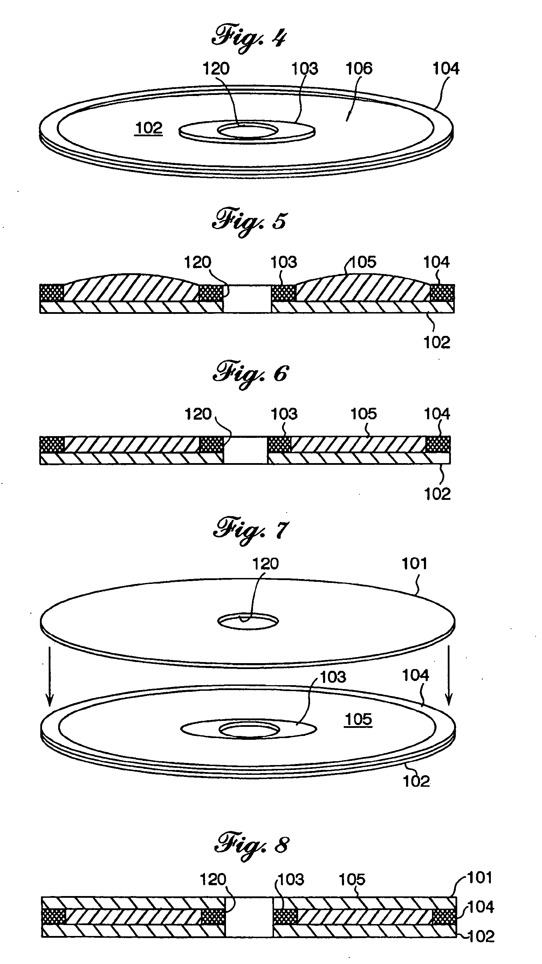

Figures 2 and 3 show a prior art holographic optical information recording disk. This optical information recording disk comprises disk-shaped top and bottom substrates 101 and 102 having center holes 120 and inner and outer spacer means, for example annular spacers, 103 and 104 through which the top and bottom substrates 101 and 102 are bonded, or otherwise secured, to each other so as to form a cell 110 therebetween. The outer annular spacer 104 has an inlet (not shown) through which a holographic recording material is infused into the cell 110. The infused material is thereafter cured to form an optical recording layer.

The optical information recording disk made by such an infusion method possibly encounters shrinkage of the holographic recording layer during curing, so that the holographic recording layer becomes uneven in thickness. More specifically, the holographic recording layer, that has a thickness of approximately 600µm, thins down at a central part as compared with a marginal part.

There has been proposed a holographic optical information recording disk such as described in, for example, Publication of Japanese Patent Application No. 2004-29476. This optical information recording disk has a structure having a holographic recording layer held between two disk-shaped holding substrates which contains a photo-curable organic material and has an outer marginal part not involved in holographic recording is previously cured with ultraviolet light. However, since the cured holographic recording layer is in a gel resin state, it is uneven in thickness between an inner marginal part and the outer marginal due to resin contraction and external stress. Consequentially, the holographic optical information recording medium encounters uneven recording performance and deterioration in the degree of multiplexing. In addition, it is unclear where a boundary between areas available and unavailable for recording of the holographic recording layer is, so that it is impossible to figure out an accurate storage capacity of the optical information recording medium.

It is an object of the present invention to provide a holographic optical information recording medium having a holographic recording layer that has a uniform and most appropriate thickness in which high density image information is recorded.

It is another object of the present invention to provide a holographic optical information recording medium having a holographic recording layer that is cured without air holes left therein.

It is still another object of the present invention to provide a method for manufacturing a holographic optical information recording medium at a high manufacturing efficiency.

It is a further object of the present invention to provide an optical information recording method, as well as an optical information reproducing method.

In accordance with one aspect of the present invention, the foregoing objects are accomplished by a method for manufacturing an optical information recording medium having a recording layer between a transparent top substrate and a bottom substrates in which optical information is recorded by the use of holography, which comprises the steps of forming a retention recess having a specified depth by either one of the transparent top substrate and the bottom substrate and spacer means secured thereto for receiving a holographic recording material therein, filling the retention recess with the holographic recording material, curing the holographic recording material in the retention recess with, for example, heat to form the holographic recording layer, preferably having a thickness greater than 100µm, and bonding the other of the transparent top substrate and the bottom substrate to the holographic recording layer and the spacer means. The retention recess is preferably filled with the holographic recording material as much as the cured holographic recording layer is flush with the spacer means.

In the case where the optical information recording medium is in the shape of a disk having a spindle hole, the spacer means may comprise an annular inner spacer provided around the spindle hole of the optical information recording medium and an annular outer spacer provided along a periphery of the optical information recording medium. Further, the retention recess may be formed by the transparent top substrate and the annular inner spacer and the annular outer spacer. Otherwise, the retention recess may be formed by the bottom substrate and the annular inner spacer and the annular outer spacer.

In accordance with anther aspect of the present invention, the foregoing objects are accomplished by an optical information recording medium for recording optical information in a holographic recording layer thereof by the use of holography, which comprises a transparent top substrate, a bottom substrates, and spacer means secured to either one of the transparent top substrate and the bottom substrate and spacer means for forming a retention recess having a specified depth on the one substrate, wherein a holographic recording material is filled and cured so as to form a holographic recording layer and subsequently the other of the transparent top substrate and the bottom substrate is secured to the holographic recording layer and the spacer means. The retention recess is filled with the holographic recording material as much as the cured holographic recording layer is flush with the spacer means.

In the case where the optical information recording medium is in the shape of a disk having a spindle hole, the spacer means may comprise an annular inner spacer provided around the spindle hole of the optical information recording medium and an annular outer spacer provided along a periphery of the optical information recording medium. Further, the retention recess may be formed by the transparent top substrate and the inner and the outer annular spacer, or otherwise by the bottom substrate and the inner and the outer annular spacer.

For recording information in the optical information recording medium, the optical information recording medium is irradiated with information-bearing light and reference light coaxial with each other so as thereby to generate interference fringes in the holographic recording layer by superposition between the information-bearing light and the reference light.

The information having been recorded in the holographic recording layer is reproduced by irradiating the optical information recording medium with reference light so as to regenerate information bearing-reproduction light from the holographic recording layer.

The foregoing and other objects and features of the present invention will be clearly understood from the following detailed description when read with reference to the accompanying drawing, in which:
Figure 1 is a schematic sectional view of a prior art optical information recording medium;
Figure 2 is an exploded perspective view of a shell construction of a prior art optical information recording medium taking the form of a disk;
Figure 3 is a sectional view of the shell construction of the optical information recording disk shown in Figure 2;
Figure 4 is a perspective view showing a process of manufacturing an optical information recording medium taking the form of a disk according to the present invention in which inner and outer spacers are secured to a bottom substrate;
Figure 5 is a sectional view showing a process of manufacturing an optical information recording medium taking the form of a disk according to the present invention in which a holographic recording material is filled in a retention recess formed on the bottom substrate;
Figure 6 is a sectional view showing a process of manufacturing an optical information recording medium taking the form of a disk according to the present invention in which the holographic recording material is cured so as thereby to for a holographic recording layer;
Figure 7 is a perspective view showing a process of manufacturing an optical information recording medium taking the form of a disk according to the present invention in which a top substrate is secured to the holographic recording layer;
Figure 8 is a sectional view of the optical information recording medium taking the form of a disk;
Figure 9 is a schematic sectional view of an optical information recording medium according to one embodiment of the present invention;
Figure 10 is a schematic sectional view of an optical information recording medium according to another embodiment of the present invention;
Figure 11 is a schematic illustration of an optical system of an optical information recording and reproducing apparatus; and
Figure 12 is a block diagram illustrating an overall structure of the optical information recording and reproducing apparatus.

The following detailed description will be directed to a method for manufacturing an optical information recording medium. Though the optical information recording medium is not described with specific embodiments thereof separately but will be intelligible from the description of the optical information recording medium manufacturing method.

A method for manufacturing an optical information recording medium comprises the steps of curing process, a bonding process and, if necessary, other processes.

The curing process is a process for curing a holographic recording layer in a retention recess defined by one of a top and a bottom substrate and inner and outer annular spacers.

The substrate, top or bottom, is not bounded by shape, structure and size and may be designed appropriately according to applications of the optical information recording medium. The substrate is preferably made in the shape of a disc or a card. It is preferred for the substrate to be made of a material capable of providing sufficient mechanical strength for the optical information recording medium. At least one of the substrates at an incident side through which a beam enters and impinges the holographic recording layer is to have sufficiently high transmittance for wavelengths of recording and reproducing or playback light.

Examples of the substrate material include glass, ceramics, resins, etc. Among them, resins are preferred in terms of moldability and cost. The resins are not bounded by type and may be selected appropriately according to purposes or applications of the optical information recording medium. Examples of the resins include acetate resins such as triaccetylcellulose, polyester resins, polyethersulfone resins, polysulfone resins, polycarbonate resins, polyamide resins, polyimide resins, polyolefin resins, acryl resins, polynorbomen resins, cellulosic resins, polyallylate resins, polystyrene resins, polyvinyl alcohol resins, polyvinyl chloride resins, polyvinyliden chloride resins, polyacrylic resins, etc. These resins may be synthesized or products on the market and may be used individually or in any combination of two or more.

The substrate is provided with a plurality of radial linear address servo areas, which serve as locating regions, arranged at regular angular intervals so as to form a sector-shaped data area between each circumferentially adjacent radial linear address servo areas. Each address servo area has focusing/tracking servo information and address information previously formed by emboss pits (servo pits) which enables focusing and tracking servo control operation in a sampled servo method. In this instance, the focusing servo may be performed by using a reflective surface of the reflection layer. It is possible to employ, for example, wobble pits for the tracking servo information. When the optical information recording medium takes the shape of a card, the substrate is not always necessary to have patterned servo pits.

The substrate is not bounded by molding process and may be molded by various processes known in the art such as film molding, extrusion molding, injection molding, blow molding, compression molding, transfer molding, calender forming, thermoforming, flow molding, laminate molding, and compression molding using a metallic mold according to purposes or applications of the optical information recording medium. Among them, it is especially preferred to employ extrusion molding or injection molding in terms of superior manufacturing efficiency. The substrate is not bounded by thickness and may have an appropriate thickness, preferably in a range from 0.3 to 2 mm, according to purposes or applications of the optical information recording medium. The substrate possibly causes uncontrollable deformation during storage if having a thickness less than 0.1 mm and makes the whole optical information medium too heavy to load a drive motor in excess if having a thickness greater than 5 mm.

The annular spacers are provided on outer and inner rims of the substrate so as to retain a desired thickness of the holographic recording layer. One of the inner and outer annular spacers, especially the inner annular spacer, may not be provided if it is convenient. The annular spacer, inner or outer, is not bounded by shape, size and material and may be designed appropriately according to applications of the optical information recording medium. Specifically, the annular spacer may have a cross section shaped such as, for example, square, rectangular, trapezoidal or elliptical and a thickness preferably in a range from 100 to 1000µm in a general way, and may be preferably made of the same material as the substrate.

These annular spacers may be provided on either one or both of the top and bottom substrates. In the case where the annular spacers are provided on the bottom substrate, there is a problem encountered by the optical information recording medium that a gap layer and a filter layer or selective reflection layer crinkle due to a strain of an adhesive layer caused by stress produced by cure shrinkage of the holographic recording layer. This results from such a structure that the selective reflection layer is coated on a polycarbonate sheet bonded as the gap layer of the bottom substrate by means of the adhesive layer and the holographic recording layer is formed and cured on the selective reflection layer. However, because the top substrate is not provided with both of a gap layer and a selective reflection layer, it is preferred to provide the annular spacers on the top substrate so as to form a retention recess for a holographic recording material. The annular spacers may be previously prepared and then bonded to the substrate or may be integrally molded as a single-piece substrate. When the annular spacers are made of a resin, they may be formed by the same molding method as the substrate.

The retention recess, formed on the top substrate or the bottom substrate, is filled with a holographic recording material. It is preferred to load an amount of holographic recording material sufficient enough to form a uniform and appropriate thickness of a cured holographic recording layer on the same level as the annular spacers. This is synonymous with that the loading amount of a holographic recording material should be determined counting in cure contraction of the holographic recording material.

The holographic recording material is not bounded by type and may be selected appropriately according to purposes or applications of the optical information recording medium. Examples of the holographic recording material include photopolymers which are polymerized by irradiated light, photorefractive materials which are modulated in refractive index by a space charge distribution caused by irradiated light, photochromic materials which are modulated in refractive index due to isomerization of molecules caused by irradiated light, inorganic materials such as a lithium niobate and a barium titanate, and chalcogen materials. Among them, it is especially preferred to use a photopolymer.

The photopolymer is not bounded by type and may be selected appropriately according to purposes or applications of the optical information recording medium. For example, the photopolymer may contain monomers and a photoinitiator, and, if necessary, a sensitizer, oligomers and other components.

Examples of the photopolymers include those described in "Photopolymer Handbook" (Kogyo Chosakai Publishing: 1989); "Photopolymer Technology" (Daily Industrial Newspapers: 1989); SPIE proceedings Vol. 3010 (1997) and Vol. 3291 (1998) of Society of Photo-Optical Instrumentation Engineers (SPIE); U.S. Patent Nos. 4,942,112, 4,959, 284, 5,759,721 and 6,221,536; Publication of International Application Nos. 97/13183, 97/44714 and 99/26112; Japanese Patent Nos. 2849021, 2873126, 2880342, 3057082 and 3161230; and Publication of Japanese Patent Application Nos. 2000-275859 and 2001-316416.

Examples of a method for changing optical characteristics of the holographic recording layer with information light include a method using diffusion of a low molecular weight component. The holographic recording layer may be added with a component that diffuses in a direction opposite to a polymerizing component in order to alleviate a volume change during polymerization or may be added with a compound having an acid cleavage structure in addition to a polymer. In the case where a photopolymer containing the low molecular weight component is used for the holographic recording layer, some holographic recording layers are required to have a liquid retention structure therein. Further, when adding a compound having an acid cleavage structure, a volume change can be controlled by compensating expansion due to cleavage and contraction due to polymerization of monomers.

The monomers are not bounded by type and may be selected appropriately according to purposes or applications of the optical information recording medium. Examples of the monomers include radical polymerization type monomers having an unsaturated bond such as an acryl group or a methacryl group and cationic polymerization type monomers having an ether structure such as an epoxy ring or an oxetane ring. These monomers may be monofunctional or multifunctional. Further, they may be of a type utilizing a bridging reaction. Examples of the radical polymerization type monomers include acryloyl morpholine, phnoxyethyl acrylate, isobornyl acrylate, 2-hydroxypropyl acrylate, 2-ethylhexyl acrylate, 1,6-hexanediol diacrylate, tripropylene glycol diacrylate, diacrylate of propylene modified neopentyl glycol 1,9-nonandiol diacrylate, hydroxypivalate neopentyl glycol diacrylate, diacrylate of ethylene oxide modified bisphenol A, polyethylene glycol diacrylate, pentaerythritol triacrylate, pentaerythritol tetraacrylate, pentaerythritol hexaacrylate, triacrylate of ethylene modified glycerol, trimethylolpropane acrylate, triacrylate of ethylene modified trimethylolpropane, 2-naphtol-1-oxyethyl acrylate, 2-carbazole-9-iy lethyl acrylate, (trimethysilyloxyl) dimethylsilyl propyle acrylate, vinyl-1-naphthoate, N-vinylcatbazole, etc. Examples of the cationic polymerization type monomers include bisphenol A epoxy resins, phenol novolac epoxy resins, grycerol triglycidyl ethers, 1,6-hexanglycidyl ethers, vinyl trimethoxy shiran, 4-vinylphenyl trimethoxyshiran, γ-methacryloxy -propyl triethoxyshiran, and compounds expressed by the following constitutional formulas (A) to (E). These monomers may be used individually or in any combination of two or more.

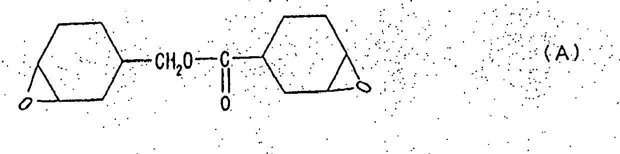

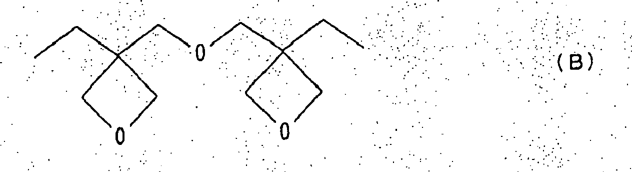

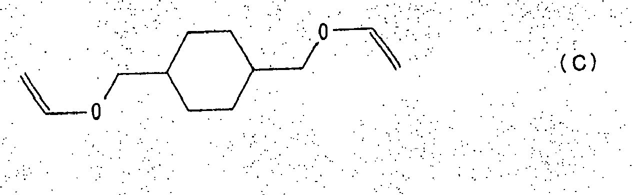

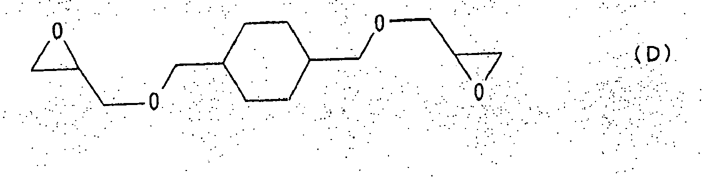

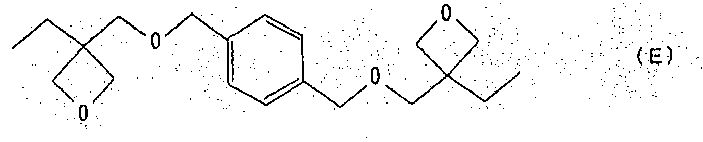

The photoinitiator is not bounded by type as long as it has a sensitivity to information light and may be of a type causing radical polymerization, cationic polymerization, bridging reaction. Examples of the photoinitiator include 2,2'-bis(o-chlorophenyl)-4,4', 5,5'-tetraphenyl-1,1-biimidazol; 2,4,6-tris(trichloromethyl)-6-(p-methoxyphenylvinyl)-1,3,5-triazine; diphenyliodonium tetrafluoroborate; diphenyliodonium hexafluorophosphate; 4,4'-di-t-butyl diphenyl iodonium tetrafluoroborate; 4-diethyl aminofenylbenzene diazonium hexafluorophospate; benzoin, 2-hydroxy-2-methyl-1-phenylpropan-2-on; benzophenone; thioxanthene; 2,4,6-trimethylbenzoil diphenylacyl phosphine oxide; triphenylbutyl borate tetraethyl ammonium; and compounds expressed by the following constitutional formula.

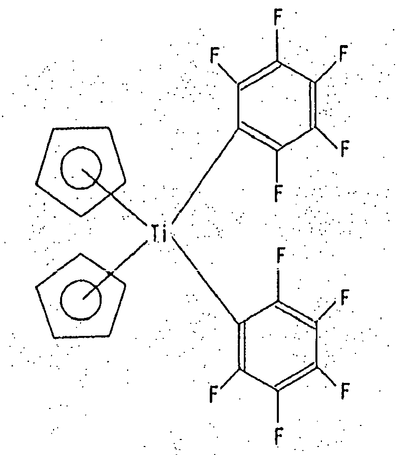

The photorefractive materials are not bounded by type as long as it shows a photorefractive effect and may be selected appropriately according to purposes or applications of the optical information recording medium. For example, the photorefractive material may comprise a charge generating material and transportation material and, if necessary, other components.

Examples of the charge generating material include phthalocyanine pigments/dyes such as metallic phthalocyanine, nonmetallic phthalocyanine and derivatives of them; naphthlocyanine pigments/dyes; azo pigments/dyes such as monoazo, disazoand trisazo; perylene pigments/dyes; indigo pigments/dyes; quinacridone pigments/dyes; polycyclic quinone pigments/dyes such as anthraquinone and anthanthrone; cyanine pigments/dyes; charge transfer complexes as typified by TTF-TCNQ comprising an electron receptive material and an electron releasing material; azulenium salts; fullerene as typified by C₆₀ and C₇₀ ; and methanofullerene that is a derivative of fullerene. These charge generating materials may be used individually or in any combination of two or more.

The charge transport material, that is a material for transporting holes or electrons and may comprise a low molecular compound or a low molecular compound, is not bounded by type. Examples of the charge transport material include nitrogen-bearing cyclic compounds such as indole, carbazole, oxazole, inoxazole, thiazole, imidazole, pyrazole, oxadiazole, pyrazoline, thia-thiazole, triazole; derivatives of the nitrogen-bearing cyclic compounds; hydrazone compounds; triphenylamine; triphenylmethane; butadiene; stilbene; quinine compounds such as anthraquinone diphenoquinone; derivatives of the quinine compounds; fullerene such as C₆₀ and C₇₀; derivatives of the fullerene; π-conjugated polymers or oligomers such as polyacetylene, polypyrrole, polythiophene and polyaniline; σ-conjugated polymers or oligomers such as polysilane and polygermane; and polycyclic aromatic compounds such as anthracene, phenanthrene and coronene. These charge transport materials may be used individually or in any combination of two or more.

The photochromic material is not bounded by type as long as it causes photochromic reaction and may be selected appropriately from various materials such as azobenzene compounds, stilbene compounds, indigo compounds, thioindigo compounds, spiropyran compounds, spirooxazin compounds, fulgide compounds, anthracene compounds, hydrazone compounds and cinnamic acid compounds according to purposes or applications of the optical information recording medium. Among them, it is preferred to use azobenzene derivatives or stilbene derivatives which cause a structural change due to this-trans isomerization by irradiated light, or spiropyran derivatives or spirooxazin derivatives which cause ring opening-ring closing structural change by irradiated light.

Examples of the chalcogen materials include materials comprising chalcogenide glass containing a chalcogen element sand metal particles dispersed in the chalcoenide glass which are able to be diffused in it by irradiated light. The chalcogenide glass is not bounded by type as long as it is made of a nonoxide amorphous material containing a chalcogen element such as S, Te or Se and capable of being photo-doped with metal particles. Examples of the amorphous material containing a chalcogen element include Ge-S glass, As-Sglass, As-Se glass, As-Se-Ce glass. Among them, it is preferred to use Ge-S glass. When using a Ge-S chalcogenide glass, although the composition ratio of Ge and S can be varied according to a wavelength of irradiated light, it is preferred for Ge-S chalcogenide glass to have a chemical composition represented by GeS₂.

The metal particles are not bounded by type as long as they are capable of being photo-doped in the chalcogenide glass and may be selected appropriately from particles of various metals such as Al, Au, Cu, Cr, Ni, Pt, Sn, In, Pd, Ti, Fe, Ta, W, Zn and Ag according to purposes or applications of the optical information recording medium. Among them, it is preferred to use Ag, Au or Cu in terms of photo-doping adaptability and, especially, Ag in terms of distinguished photo-doping adaptability. The metal particle content of the chalcogenide glass is preferably in a range of from 0.1 to 2 % by volume, and more preferably in a range of from 0.1 to 1.0 % by volume, with respect to the whole holographic recording layer. If the metal particle content is less than 0.1 % by volume, the holographic recording layer possibly encounters deterioration of recording accuracy due to insufficiency of a change in transmittance by photo-doping. If the metal particle content is beyond 2 % by volume, the holographic recording layer has photo transmittance too low to cause photo-doping sufficiently.

The holographic recording layer can be formed by various methods known in the art such as an injection method, a deposition method, a wet coating method, a molecular beam epitaxy (MBE) method, a cluster ion beam method, a molecular lamination method, a laser beam method, a printing method and a transfer method. Among them, it is preferred to form the holographic recording layer by the injection method or the wet coating method. The injection method is performed by using a dispenser. The wet coating method is well performed by using a coating liquid with a holographic recording material dissolved or dispersed therein. The wet coating method is not bounded by type and may be selected from among, for example, an inkjet coating method, a spin coating method, a kneader coating method, a bar coating method, a blade coating method, a cast coating method, a dip coating method and a curtain coating method.

Curing of the holographic recording layer is not bounded by type and may be performed by various methods known in the art such as ultraviolet curing and heat curing. It is preferred to cure the holographic recording layer at a temperature of from 60 to 200°C for from one to 24 hours. According to the method for manufacturing the optical information recording medium of the present invention in which the holographic recording layer formed on one of the top and bottom substrates is cured before it is covered by the other substrate, bubbles are efficiently removed from the holographic recording material during curing and no air holes remains in the holographic recording layer.

The bonding process is performed to bond one of top and bottom substrates (for example the top substrate) to the other substrate (i.e. the bottom substrate) with the holographic recording layer formed thereon after the holographic recording layer has been cured. The top substrate is bonded to the inner and outer annular spacers and the cured holographic recording layer with an adhesive taking care not to allow bubbles to enter inside the top substrate. The adhesive is not bounded by type and may be selected appropriately various adhesives known in the art such as rubber-base adhesives, silicone adhesives, acrylic adhesives, urethane adhesives, vinyl alkyl ether adhesives, polyvinyl alcohol adhesives, polyvinyl prrolidone adhesives, polyacrylamide adhesives and cellulosic adhesives according to purposes or applications of the optical information recording medium.

The other process performed as needed include a reflection layer forming process. A filter layer forming process, a first gap layer forming process and a second gap layer forming process.

The optical information recording medium manufactured as described above is adapted to have the holographic recording layer adjusted uniformly and appropriately in thickness, more specifically, preferably greater than 100µm and more preferably in a range from 100 to 900µm in thickness. The holographic recording layer provides a sufficient SN ratio even 10 to 300 multiple shift recording is performed when having the preferred thickness and a more enhanced SN ratio when having the more preferred thickness.

The method for manufacturing the optical information recording medium, taking the form of a disk, will be specifically described with reference to Figures 4 to 8.

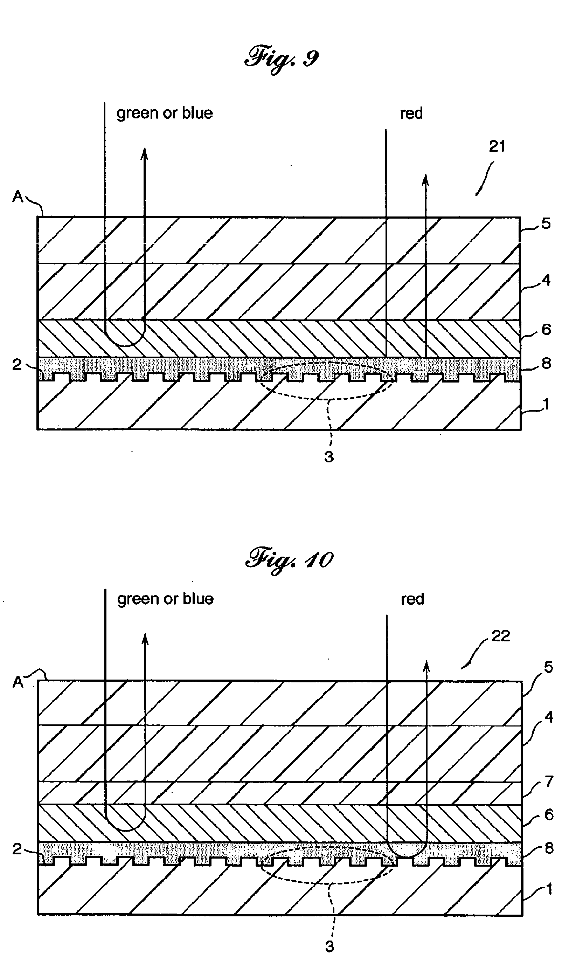

As shown in Figure 4, a retention recess 106 is formed by bonding an inner annular spacer 103 and an outer annular spacer 104 to a disk-shaped bottom substrate 102 with an adhesive. Subsequently, a holographic recording material (e.g. a photopolymer) 105 is put in the retention recess 106. The amount of the holographic recording material 105 to be put in the retention recess 106 is precisely worked out beforehand counting in cure contraction of the holographic recording material 105. Therefore, the holographic recording material in the retention recess 106 has a convex bulge due to surface tension as shown in Figure 5. Then, the holographic recording material 105 is cured at a temperature of 80°C for two hours in a baking furnace while keeping the bottom substrate 102 in a horizontal position. As a result of cure contraction, the holographic recording material 105 is flatten out to form a holographic recording layer 105 even with the annular spacers as shown in Figure 6. The cured holographic recording layer 105 is uniform and optimized in thickness. After the holographic recording layer 105 has been cured sufficiently, a disk-shaped transparent top substrate 101 is bonded to the inner and annular spacers 103 and 104 and the cured holographic recording layer 105 with an adhesive as shown in Figure 7. This bonding process is performed in an atmosphere decompressed sufficiently enough to bring the top substance into close contact with the annular spacers 103 and 104 and the cured holographic recording layer 105. The adhesive applied to the cured holographic recording layer 105 is transparent. In this instance, bubbles produced in the holographic recording layer 105 during curing are efficiently released from the surface of the holographic recording layer 105, so that no bubbles reside in the holographic recording layer 105. In this way, the optical information recording disk is completed as shown in Figure 8.

In this embodiment just described above, the terms "top" and "bottom" can be transposed each other. In other words, the retention recess 106 may be formed on the top substrate 101. In this case, the gap layer and the filter layer provided on the bottom substrate 102 are prevented from causing crinkles due to cure contraction of a holographic recording material.

The optical information recording medium of the present invention will be described in detail below. The optical information recording medium comprises a holographic recording layer, a filter layer, a reflection layer, first and second gap layers, and, additionally, other layers as appropriate, formed between a top and a bottom substrates.

The holographic recording layer is made of a material capable of varying optical characteristics such as optical absorptivity, refractive index or the like according to intensity of specified electromagnetic wave lengths and formed in a uniform and appropriate thickness by the method just described above.

The filter layer, that is provided between the bottom substrate and the holographic recording layer, is adapted to transmit a specified wavelength of light, for example red light, (which is hereafter referred to as first light) and to reflect a specified wavelength of light different from the first light, for example green light, (which is hereafter referred to as second light). The filter layer has a thickness preferably in a range of from 1 to 30µm and more preferably in a range of from 3 to 10µm. Preferred examples of the filter layer is a dichroic mirror layer or a cholesteric liquid crystal layer. The cholesteric liquid crystal layer comprises at least a nematic liquid crystal compound and a chiral compound and, if necessary, a polymerizable monomer and other components. A preferred cholesteric liquid crystal layer has a function of circular polarized light separation. Such the cholesteric liquid crystal layer selectively reflects a circular polarized light component that the circular polarized light has a polarization direction coincide with a rotative direction of spiral of the liquid crystal and a wavelength coincide with the pitch of spiral of the liquid crystal. Therefore, the cholesteric liquid crystal layer is constructed such that it transmits circular polarized light having a specified wavelength (red light in this case) and reflects the remaining circular polarized light (green light), thereby separating two beams of circular polarized light from available light in a specified band of wavelength utilizing the selective reflection feature.

It is preferred to set a cholesteric crystal liquid layer-bearing film on the bottom substrate. The cholesteric crystal liquid layer-bearing film is prepared by coating a cholesteric crystal liquid over a backing, orienting and solidifying the coated cholesteric crystal liquid and then punching out the backing into the same disk-shape as the retention recess of the bottom substrate. It is of course allowed to coat a cholesteric crystal liquid directly on the bottom substrate.

The reflection layer, that is formed over patterned servo pits on the bottom substrate, is made of a material having a high reflectivity for both information light and reference light. It is preferred to use Al, an Al alloy, Ag or an Ag alloy when employing information and reference light having wavelengths in a range of from 400 to 780nm, or Al, an Al alloy, Ag, an Ag alloy, Au, A Cu alloy or TiN when employing information and reference light having wavelengths longer than 650nm.

The reflection layer may be composed of a dye type recording layer such as used for DVD-R so that the optical information recording medium is made capable of writing or rewriting directory information such as a hologram recorded area, a rewritten time, an error location, an alteration proceeding and the like in the reflection layer and erasing them using red laser light without having an effect on hologram in the holographic recording layer, beside reflecting red laser light.

Formation of the reflection layer is not bounded by forming process and may be performed by various vapor-phase growth known in the art such as vacuum deposition, spattering, plasma chemical vapor deposition (CVD), photo chemical vapor deposition (CVD), ion plating and electronic beam vapor deposition according to applications of the optical information recording medium. Among them, it is preferred to employ spattering in terms of commercial production adaptability and coating quality. The reflection layer has a thickness preferably greater than 50nm and more preferably greater than 100nm in terms of satisfactory reflectivity

The first gap layer is formed between the filter layer and the reflection layer as appropriate in order to smooth out the top surface of the bottom substrate, and besides to adjust a size of a hologram produced in the holographic recording layer. Because it is required for the holographic recording layer to have a region where information and reference light interfere adjusted to a certain extent, it is effective to provide a gap between the holographic recording layer and the patterned servo pits. The first gap layer is not bounded by thickness and may have a thickness preferably in a range of from 1 to 200µm according to purposes or applications of the optical information recording medium.

The second gap layer is formed between the filter layer and the holographic recording layer as appropriate. The first gap layer is not bounded by material and may be made of a transparent resin film or a norbomen resin film. Examples of such a film material include triacetylcellulose (TAC), polycarbonate (PC), polyethylene terephthalate (PET), polystyrene (PS), polysulfone (PSF), polyvinyl alcohol (PVA), methyl polymethacrylate-polymethylmethacrylate (PMMA), ARTON (trade name) which is produced by JSR and Zeonoa (trade name) which is produced by Nihon Zeon Co., Ltd. according to purposes or applications of the optical information recording medium. The second gap layer is not bounded by thickness and may have a thickness preferably in a range of from 1 to 200µm according to purposes or applications of the optical information recording medium.

Figure 9 shows the construction of an optical information recording medium 21 according to a first embodiment of the present invention. The optical information recording medium 21 has a bottom substrate 1 and a transparent top substrate 5 which are made of, for example, a polycarbonate resin or glass. A plurality of patterned servo pit clusters 3 are formed allover on one side of the bottom substrate 1. The patterned pit clusters 3 may be formed at a given spacing as shown in Figure 1. The servo pit has a maximum height of 1750Å (175 nm) which is thin enough as compared with thickness of other layers. The bottom substrate 1 is coated with a reflection layer 2 of Al, Au or Pt on one side thereof where the patterned servo pits is formed. The optical information recording medium 21 is provided with a gap layer 8, a filter layer 6 and a holographic recording layer 4 formed in this sequential order on the bottom substrate 1. The gap layer 8, that is formed by coating an ultraviolet cure resin over the reflection layer 2, serves to protect the reflection layer 2 and to adjust an extent of a hologram produced in the holographic recording layer 4. The holographic recording layer 4 is formed so as to be interposed between filter layer 6 and the transparent top substrate 5. The filter layer 6, that is formed by coating a cholesteric liquid crystal over the gap layer 8, serves to transmit red light only and reflect the remaining components of light such as green light or blue light. In this instance, the gap layer 6 may be coated directly over the gap layer 8 or provided by laminating a thin film coated with three-layers of cholesteric liquid crystal on the gap layer 8. In this embodiment in which the filter layer 6 comprises a cholesteric liquid crystal layer, it is necessary for the optical information recording medium to have λ/4 retarder means between the cholesteric liquid crystal layer and an incidence/exit surface of the optical information recording medium (in this case, the surface of the transparent top substrate) as one of its constituents, or otherwise, to be accompanied by a λ/4 retarder plate between the optical information recording medium and a dichroic mirror forming a part of an optical information recording/reproducing apparatus. The λ/4 retarder means or plate operates to shift a wavelength of green light only by a quarter so as to transform green light into circularly polarized light and the remaining light (e.g. red light) into elliptically polarized light.

The optical information recording medium may be disk-shaped or card-shaped. A card-shaped optical information recording medium may not be provided with patterned servo pit clusters. When the optical information recording medium 21 is 1.9mm in thickness, the bottom substrate 1, the gap layer 8, the filter layer 6, the holographic recording layer 4 and the top substrate 5 are 0.6mm, 100µm, 2 to 3µm, 0.6mm and 0.6mm in thickness, respectively.

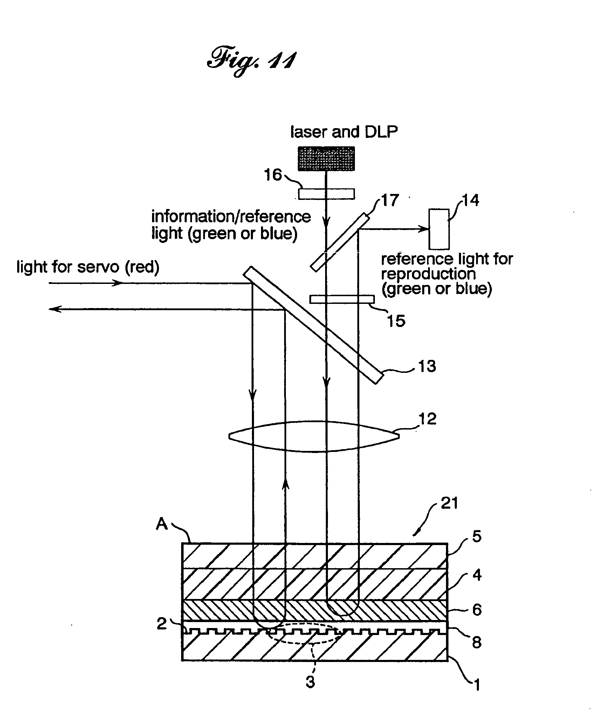

Referring to Figure 11 schematically showing optical information recording/reproducing, laser light (in this case, a red laser light) for servo emanating from a laser source (not shown) and collimated by a condenser lens (not shown) is almost completely reflected by a dichroic mirror 13 and focused on the reflection layer 2 by an objective lens 12. The dichroic mirror 13 takes the form of beam splitting means for reflecting red light only and transmitting green or blue light. The laser light entering the incidence/exit surface A of the optical recording medium 21 sequentially passes through the top substrate 5, the holographic recording layer 4, the filter layer 6 and the gap layer 8 and then impinges on and is reflected by the reflection layer 2. The laser light reflected by the reflection layer 2 returns taking a reverse way and comes out from the incidence/exit surface A. The laser light coming out from the optical recording medium 21 is completely reflected by the dichroic mirror 13 and then detected by a photo-sensor (not shown) serving as a servo information detector for detecting servo information used for servo operation including at least focusing servo, tracking servo and slide servo. Since the holographic recording layer 4 is non-photsensitive to a red light, the holographic recording layer 4 is not affected by the laser light passing therethrough and stray laser light reflected diffusely by the reflection layer 2. On the other hand, information light or reference light (in this case, green or blue laser light) emanating from a laser source 18 controlled by a digital light processor (DLP) and collimated by a condenser lens (not shown) is converted into a linearly polarized light by a polarization plate 16 and passes through a half mirror 17 and then is further converted into circularly polarized light by a quarter-wave (λ/4) plate 15. The circularly polarized light passes through the dichroic mirror 13 and is converged by the objective lens 12. Specifically, the converged laser light enters the optical recording medium 21 through the incidence/exit surface A, and then passes through the top substrate 5 and reaches the holographic recording layer 4 where information is recorded by means of an interference pattern formed by information light and reference light. The laser light further passes through the holographic recording layer 4 and is reflected by the filter layer 6 before reaching the bottom of the filter layer 6. The laser light reflected by the filter layer 6 returns taking a reverse way and comes out from the incidence/exit surface A. The laser light coming out from the optical recording medium 21 completely passes through the dichroic mirror 13 and the quarter-wave (λ/4) plate 15. When reproducing reference light, the reflected laser light is reflected by the half mirror 17 and then detected by an image sensor device 14 such as a CMOS sensor or a CCD.

Figure 10 shows the construction of an optical information recording medium 22 according to a second embodiment of the present invention. The optical information recording medium 22 has the same construction as the first embodiment except for another gap layer which is provided between a filter layer and a holographic recording layer. That is, the optical information recording medium 22 has a first gap layer 8, a filter layer 6, a second gap layer 7 and a holographic recording layer 4 formed in this sequential order between a bottom substrate 1 having patterned servo pits 3 coated with a reflection layer 2 and a transparent top substrate 5. The second gap layer 7 is transparent and non photoreactive. If information light and reference light are focused in a substratum forming bottom part of the holographic recording layer 4, excessive consumption of monomers forming the material of the holographic recording layer 4 occurs due to overexposure. This induces a problem of deterioration in multiplex recording ability is encountered by the optical information recording medium 22. For this reason, the substratum of the holographic recording layer 4 is replaced with the second gap layer 8. When the optical information recording medium 22 is 2.2mm in thickness, the bottom substrate 1, the first gap layer 8, the filter layer 6, the second gap layer 7, the holographic recording layer 4 and the top substrate 5 are 1.0mm, 100µm, 3 to 5µm, 70µm, 0.6mm and 0.4mm in thickness, respectively.

Recording information in the optical information recording medium 22 or reproducing the information from the optical information recording medium 22 is performed using the optical information recording/reproducing apparatus shown in Figure 11. The optical information recording medium 22 is irradiated with a laser light (in this case, red laser light) for servo and information and reference light (green or blue). The laser light for servo entering the optical information recording medium 22 through an incidence/exit surface A sequentially passes through the top substrate 5, the holographic recording layer 4, the second gap layer 7, the filter layer 6 and the first gap layer 8 and then impinges on and is reflected by the reflection layer 2. The laser light reflected by the reflection layer 2 returns taking a reverse way and comes out from the incidence/exit surface A. The laser light for servo coming out from the optical recording medium 21 is used for servo operation including at least focusing servo, tracking servo and slide servo. On the other hand, information light or reference light (in this case, green or blue laser light) entering the optical information recording medium 22 through an incidence/exit surface A sequentially passes through the top substrate 5, the second gap layer 7 and reaches the holographic recording layer 4 where information is recorded by means of an interference pattern formed by information light and reference light. The laser light further passes through the holographic recording layer 4 and is reflected by the filter layer 6. The laser light reflected by the filter layer 6 returns taking a reverse way and comes out from the incidence/exit surface A.

As is apparent from the above description, recording information in the optical information recording medium 21 or 22 is performed by generating interference fringes inside the holographic recording layer 4 by superposition of information-bearing light ona two dimensional intensity distribution and reference light having a nearly uniform intensity so as to record the information in the form of a distribution of optical characteristic. In order to reproduce the information, the optical information recording medium 21 or 22 is irradiated with reference light so as to be distributed by the interference fringes. Consequently, the information is reproduced in the form of the distribution of optical characteristic.

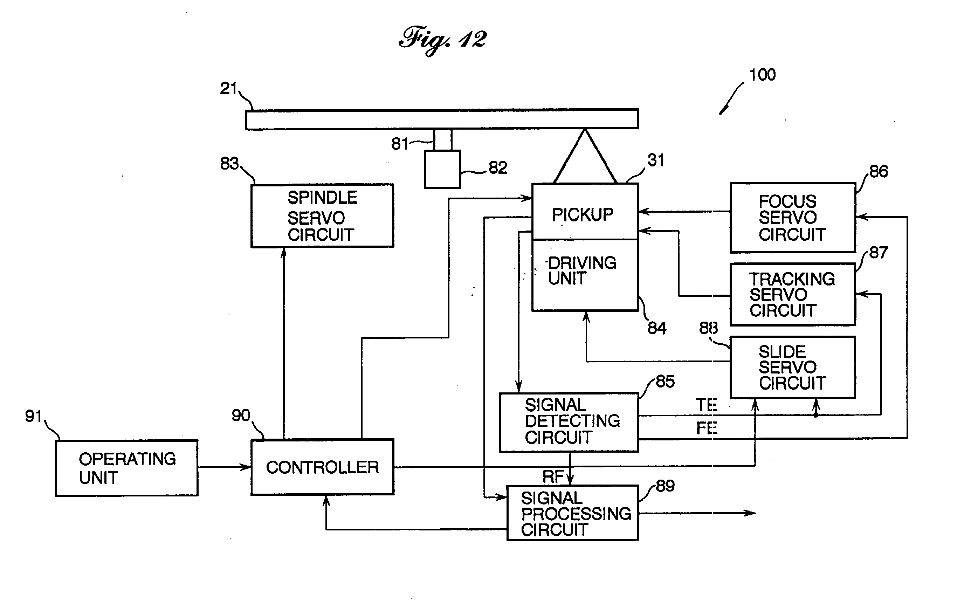

Referring to Figure 12 showing the construction of an optical information recording/reproducing apparatus 100 for recording information in and reproducing the information from the optical information recording medium 21, by way of example, of the present invention, the optical information recording/reproducing apparatus 100 is provided with a spindle 81 to which the optical information according medium 21 is attached, a spindle motor 82 for driving the spindle 81 and a spindle servo circuit 83 for maintaining a specified speed of rotation of the optical information according medium 21. The optical information recording/reproducing apparatus 100 is further provided with a pickup 31 which provides information light and reference light for recording information in the optical information recording medium 21 or reference light for picking up reproducing light to reproduce the information from the optical information recording medium 21 or 22. The pickup 31 is accompanied by a drive unit 84 for controlling movement of the pickup 31 in a radial direction of the optical information recording medium 21. The optical information recording/reproducing apparatus 100 is further provided with various circuits, namely a signal detection circuit 85, a focusing servo circuit 86, a tracking servo circuit 87, a slide servo circuit 88 and a signal processing circuit 89. The signal detection circuit 85 operates to detect a focusing error signal FE, a tracking error signal TE and a reproduction signal RF from output signals of the pickup 31. The focusing servo circuit 86 operates to drive an actuator in the pickup 31 so as to move an objective lens (not shown) in a direction of thickness of the optical information recording medium 21 for performing focusing servo control according to the focusing error signal FE. The tracking servo circuit 87 operates to drive the actuator in the pickup 31 so as to move the objective lens in a radial direction of the optical information recording medium 21 for performing tracking servo control according to the tracking error signal TE. The slide servo circuit 88 operates to control the drive unit 84 so as to move the pickup 31 in a radial direction of the optical information recording medium 21 for performing slide servo control according to the tracking error signal TE and a command signal from a controller 90 which will be described later. The signal processing circuit 89 operative to reproduce of data stored in a data area of the optical information recording medium 21 by decoding data from a CMOS sensor or a CCD array which will be described later and to reproduce basic clocks from the reproduction signal RF provided by the signal detection circuit 85 and to discriminate addresses. The reproduced basic clocks are sent to the spindle servo circuit 83. The controller 90, which comprises CPU, ROM and RAM such that the CPU executes programs stored in the ROM in the RAM as a working area, receives various command signals through an operation control panel 91 and performs overall control of the optical information recording/reproducing apparatus 100. Specifically, the controller 90 receives basic clocks and address and controls the pickup 31, the spindle servo circuit 83 and the slide servo circuit 88.

In order to assess the optical information recording medium of the present invention, practical and comparative examples of the optical information recording medium were made by the method of the present invention illustrated in Figures 4 through 8.

### Practical example

An optical information recording medium, taking the form of a disc having a construction such as shown in Figure 8, was prepared as a practical example. The practical optical information recording medium, taking the form of a disk, was comprised by a polycarbonate bottom substrate 102 having a diameter of 102 mm and a thickness of 0.6mm that is generally used for a DVD-RW. The bottom substrate 102 was provided with patterned servo pit clusters 3 at a regular track pitch of 0.74µm formed as integral parts over the whole surface thereof. The respective pits were 175nm in depth and 300nm in width. After bonding inner and outer annular spacers 103 and 104, both having a thickness of 600µm, to the bottom substrate so as to form a retention recess 106, an Al coating film having a thickness of 200µm was formed as a reflection layer 2 allover the servo pits by DC magnetron spattering. Subsequently, a filter layer 6 was prepared beforehand by coating a base film coated with a cholesteric liquid layer of CM-33 (trade name of Chisso Corporation) and punching out it into a specified size of disk so as to fit right in the retention recess 106. The filter layer 6 thus prepared was bonded to the bottom substrate 102 with an ultraviolet cure adhesive or an adhesive with the base film being faced to the servo pits 3 taking care not to allow bubbles to get into the adhesive so that the total thickness of the filter layer 6 including the adhesive layer was 6µm.

Subsequently, a holographic recording layer 4 was formed over the filter layer 6 by applying a photopolymer liquid using a dispenser (see Figure 5) and was cured at a temperature of 80°C for two hours in a baking oven. The photopolymer liquid had the following composition:

| | |
|---|---|
| Di(urethane acrylate) oligomer (ALU-351: Echo Resins Corporation) | 59 parts by mass |
| Isobomyl acrylate | 30 parts by mass |
| Vinyl benzoate | 10 parts by mass |
| Polymerization initiator (Irgacure 784: Ciba Specialty Chemicals Corporation) | 1 part by mass |

The cured holographic recording layer 4 was 600µm in thickness and was flush with the inner and outer annular spacers 103 and 104 (see Figure 6). Finally, a polycarbonate top substrate 5 was pushed against and bonded to the cured holographic recording layer 4 with an additive to complete the optical information recording medium as a practical example.

### Comparative example

An optical information recording medium, having a shell construction similar to the prior art optical information recording medium such as shown in Figures 2 and 3 and an internal layer construction similar to the practical information recording medium, was prepared as a comparative example. The comparative optical information recording medium was comprised by polycarbonate top and bottom substrate 101 and 102 having a diameter of 102 mm and a thickness of 0.6mm. Each of the top and bottom substrates 101 and 102 was made of a polycarbonate disk having a diameter of 12cm and a thickness of 600µm. The bottom substrate 102 was provided with patterned servo pit clusters 3 at a regular track pitch of 0.74µm formed as integral parts over the whole surface thereof The respective pits were 175nm in depth and 300nm in width. An Al coating film having a thickness of 200µm was formed as a reflection layer 2 allover the servo pits by DC magnetron spattering. Subsequently, a filter layer 6, comprising a base film having a specified size of disk and a cholesteric liquid layer of CM-33 (trade name of Chisso Corporation) coated over the base film was bonded to the bottom substrate 102 with an ultraviolet cure adhesive or an adhesive with the base film faced to the servo pits 3 taking care not to allow bubbles to get into the adhesive. The total thickness of the filter layer 6 including the adhesive layer was 6µm. Thereafter, the top and bottom substrates 101 and 102 were fixedly attached through inner and outer annular spacers 103 and 104 with an adhesive so as thereby to form a cell 110 having a depth of 600µm therebetween. The outer annular spacer 104 has an inlet (not shown) through which a holographic recording material is infused into the cell 110. Subsequently, a holographic recording layer 4 was formed by infusing the same photopolymer liquid as that of the practical optical information recording medium into the cell 110 through the inlet formed in the outer annular spacer 104 using a dispenser. More specifically, after filling the cell 110 with the photopolymer liquid to nine-tenths of it and degassing the photopolymer liquid in a vacuum degassing tank three times, the cell 110 is completely filled with the photopolymer liquid using the dispenser and then the cell 110 was closed up by filling the inlet of the outer annular spacer 104 with a sealant. Finally, the photopolymer liquid was cured so as thereby to form a holographic recording layer 4 having a thickness of 600µm. In this manner, the optical information recording medium was completed as a comparative example.

The optical information recording media of the practical and comparative examples were assessed on their properties including storage stability of recorded information and uniformity of thickness of the holographic recording layer. The result of assessment is shown in Table.

The storage ability was estimated on whether a problem of information reproduction was encountered by the optical information recording media of the practical and comparative examples that were subjected to an accelerated preservation test at a temperature of 60°C and a relative humidity of 90% for one week and graded according to the following standards.
⊚ : Very good in storage ability
○ : Good in storage ability
Δ : Poor in storage ability (practically acceptable)
× : Very poor in storage ability (practically unacceptable)

The uniformity of thickness of the holographic recording layer was estimated on circumferential and radial distributions of thickness of the holographic recording layer peeled off from the base substrate determined using a non-contact laser film thickness meter and graded according to the following standards.
○ : Thickness is uniform at both inner and outer parts
× : Thickness varies

| | Storage ability | Uniformity in thickness |
|---|---|---|
| Practical Example | ○ | ○ |
| Comparative example | ○ | × |

As apparent from the description, the optical information recording medium of the present invention has the holographic recording layer uniform and appropriate in thickness and is capable of recording information at a significant high density by coaxial irradiation of information-bearing light and reference light. Furthermore, the optical information recording medium of the present invention is manufactured at a high efficiency.

While the exemplary embodiments described above are presently preferred, it should be understood that the embodiments are offered by way of example only. Accordingly, the present invention is not limited to a particular embodiment, but extends to various modifications that nevertheless fall within the scope of the appended claims.

## Claims

**1.** A method for manufacturing an optical information recording medium having a recording layer between a transparent top substrate and a bottom substrate in which optical information is recorded by the use of holography, **characterized by** the steps of:
forming a retention recess having a specified depth defined by either one of said transparent top substrate and said bottom substrate and spacer means secured to said one substrate for receiving a holographic recording material therein;
filling said retention recess with said holographic recording material;
curing said holographic recording material in said retention recess so as thereby to form said holographic recording layer; and
bonding the other of said transparent top substrate and said bottom substrate to said holographic recording layer and said spacer means.

**2.** A method for manufacturing an optical information recording medium as defined in claim 1, **characterized in that** said retention recess is filled with said holographic recording material as much as said cured holographic recording layer is flush with said spacer means.

**3.** A method for manufacturing an optical information recording medium as defined in claim 1 or 2, **characterized in that** said optical information recording medium is in the shape of a disk having a spindle hole and said spacer means comprises an inner annular spacer provided around said spindle hole of said optical information recording medium and an outer annular spacer provided along a periphery of said optical information recording medium.

**4.** A method for manufacturing an optical information recording medium as defined in claim 3, **characterized in that** said retention recess is formed by said transparent top substrate and said inner and said outer annular spacer.

**5.** A method for manufacturing an optical information recording medium as defined in claim 3, **characterized in that** said retention recess is formed by said bottom substrate and said inner and said outer annular spacer.

**6.** A method for manufacturing an optical information recording medium as defined in any one of the preceding claims 1 to 5, **characterized in that** said holographic recording material is cured by heat.

**7.** A method for manufacturing an optical information recording medium as defined in any one of the preceding claims 1 to 6, **characterized in that** said holographic recording layer is greater than 100µm in thickness.

**8.** An optical information recording medium for recording optical information in holographic recording means by the use of holography which comprises a transparent top substrate, a bottom substrate and spacer means secured to either one of said transparent top substrate and said bottom substrate, **characterized in that** said optical information recording medium is manufactured by a method as defined in any one of the preceding claims 1 to 6.

**9.** A method for manufacturing an optical information recording medium as defined in claim 8, **characterized in that** said holographic recording layer is greater than 100µm in thickness.

**10.** A method for recording information in an optical information recording medium as defined in claim 8 or 9, **characterized by** irradiating said optical information recording medium coaxially with information-bearing light and reference light so as thereby to generate interference fringes in said holographic recording layer of said optical information recording medium by superposition between said information-bearing light and reference light

**11.** An information recording method as defined in claim 10, **characterized in that** said information-bearing light has intensity distributed in two dimension and said reference light has nearly uniform intensity.

**13.** A method for reproducing information from an optical information recording medium as defined in claim 8 or 9, in which said information has been recorded in a holographic recording layer by the use of holography, **characterized by** irradiating said optical information recording medium with reference light so as to regenerate information bearing-reproduction light from said holographic recording layer.
